# EUROPÄISCHE PATENTANMELDUNG

(11) **EP 1 757 840 A1**
(43) Veröffentlichungstag der Anmeldung: **28.02.2007**
(21) Anmeldenummer: 05018514.9
(22) Anmeldetag: 25.08.2005
(51) Int. Cl.: F16H 15/26, F16H 15/28, F16H 15/30

(54) **Stufenloses Getriebe**

(71) Anmelder: Magna Drivetrain AG & Co KG, 8502 Lannach (AT)
(72) Erfinder: Hasewend, Wolfram Dr., 8041 Graz (AT)
(74) Vertreter: Manitz, Finsterwald & Partner GbR

(57) **Zusammenfassung**

Die Erfindung betrifft ein stufenloses Getriebe mit wenigstens einer Getriebeeinheit. Die Getriebeeinheit besitzt eine erste Welle, die mit einer Kugelfläche drehfest verbunden ist. Ferner besitzt die Getriebeeinheit eine zweite Welle, die mit einer drehbaren Anordnung von mehreren Rollen drehfest verbunden ist. Die Rollen liegen reibschlüssig an der Kugelfläche an. Die Rollenachsen sind derart ausgerichtet, dass aufgrund des Reibschlusses zwischen den Rollen und der Kugelfläche ein Drehmoment zwischen der Kugelfläche und der Rollenanordnung übertragbar ist und dass die Drehachse der Kugelfläche und die Drehachse der Rollenanordnung durch Abrollen der Rollen an der Kugelfläche relativ zueinander verschwenkbar sind.

## Beschreibung

Die Erfindung betrifft ein stufenloses Getriebe mit einer oder mehreren Getriebeeinheiten. Stufenlose Getriebe sorgen in Kraftfahrzeugen für einen stufenlos variablen Übersetzungsverlauf. Hierdurch kann für jede Fahrzeuggeschwindigkeit der günstigste Drehzahlbereich des Motors eingehalten werden. Übersetzungsänderungen können kontinuierlich unter Last erfolgen, so dass ein Übersetzungswechsel nicht oder kaum spürbar ist.

Bekannt sind beispielsweise Doppelkonus-Umschlingungsgetriebe, bei denen eine Laschenkette, ein Schubgliederband oder ein Keilriemen zwei Kegelscheibenpaare umschlingt. Ferner sind Toroidgetriebe, hydrostatische Stufenlosgetriebe und Reibradgetriebe bekannt.

Es ist eine Aufgabe der Erfindung, ein stufenloses Getriebe zu schaffen, das in kompakter Ausführung und bei hohem Wirkungsgrad hohe Übersetzungen ermöglicht. Unterschiedliche Bauformen (koaxial, Achsversatz) sollen möglich sein.

Diese Aufgabe wird durch ein stufenloses Getriebe mit wenigstens einer Getriebeeinheit gemäß den Merkmalen des Anspruchs 1 gelöst, und insbesondere dadurch, dass die Getriebeeinheit eine erste Welle aufweist, die mit einer Kugelfläche drehfest verbunden ist, und dass die Getriebeeinheit eine zweite Welle aufweist, die mit einer drehbaren Anordnung von mehreren Rollen drehfest verbunden ist, wobei die Rollen reibschlüssig an der Kugelfläche anliegen, und wobei die Rollenachsen derart ausgerichtet sind, dass aufgrund des Reibschlusses zwischen den Rollen und der Kugelfläche ein Drehmoment zwischen der Kugelfläche und der Rollenanordnung übertragbar ist und dass die Drehachse der Kugelfläche und die Drehachse der Rollenanordnung durch Abrollen der Rollen an der Kugelfläche relativ zueinander verschwenkbar sind.

Demnach sind an der zweiten Welle mehrere Rollen vorgesehen, die an der Kugelfläche der ersten Welle lediglich reibschlüssig (nicht formschlüssig) anliegen. Unter einer Rolle ist im Zusammenhang mit der Erfindung ein Wälzkörper mit einer festgelegten Drehachse zu verstehen, d.h. im Unterschied beispielsweise zu den Kugeln eines Kugelgleichlaufgelenks besitzt die Rollenachse eine vorbestimmte Ausrichtung, die durch die Lagerung der Rolle an der zweiten Welle bzw. an einem hiermit verbundenen Rollenträger festgelegt ist. Somit ist senkrecht zu der Rollenachse eine Rollbewegung der Rolle an der Kugelfläche möglich, während in Richtung der Rollenachse ein Reibschluss zwischen der Rolle und der Kugelfläche wirkt.

Die Rollen sind dergestalt an der Kugelfläche angeordnet, dass die Anordnung der Rollen (z.B. Rollenträger) relativ zu der Kugelfläche zwar verschwenkt werden kann, wobei die Rollen an der Kugelfläche abrollen. Eine Rotation der Rollenanordnung um ihre festgelegte Drehachse ist aufgrund des Reibschlusses zwischen den Rollen und der Kugelfläche allerdings nur bei gleichzeitiger Rotation der Kugelfläche und somit bei gleichzeitiger Rotation der hiermit drehfest gekoppelten ersten Welle möglich.

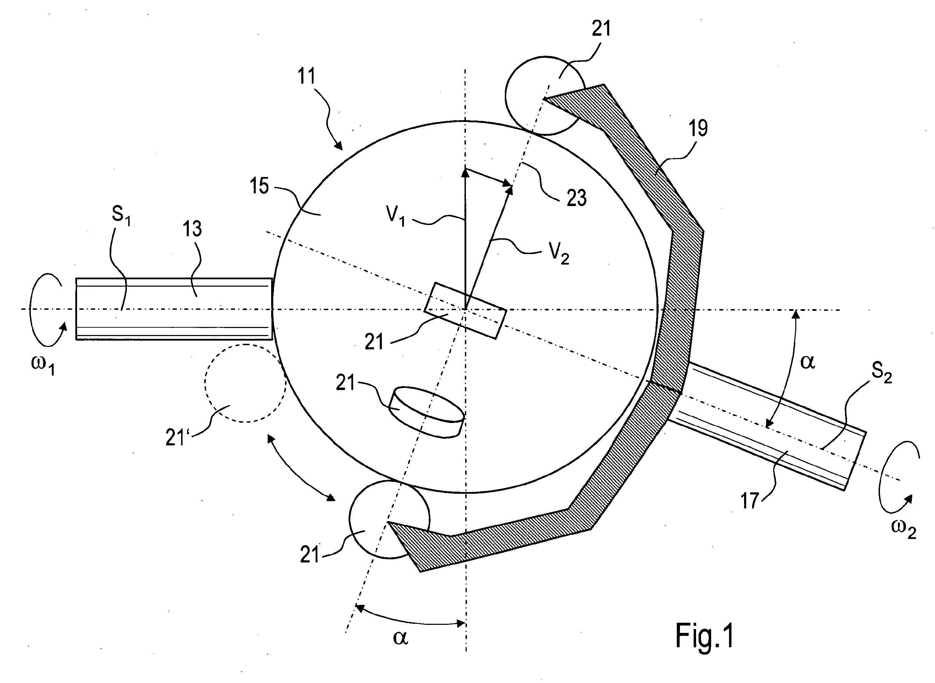

Aufgrund dieser Anordnung kann während einer Rotation der Wellen der Winkel zwischen der Drehachse der Kugelfläche und der Drehachse der Anordnung der mehreren Rollen verändert werden. Dieser Winkel wird nachfolgend als Beugungswinkel α bezeichnet. Durch die Änderung des Beugungswinkels α wird eine stufenlose Änderung der Übersetzung der Getriebeeinheit bewirkt. Für die Übersetzung i der Getriebeeinheit gilt eine Cosinus-Beziehung, nämlich i = cos(α). Diese Abhängigkeit der Übersetzung i vom Beugungswinkel α resultiert daraus, dass für verschiedene Beugungswinkel α die jeweilige Bewegungsrichtung der Kugelfläche einerseits und der hieran anliegenden Rollen andererseits unterschiedlich gerichtet ist, wie nachfolgend anhand von Fig. 1 noch näher erläutert wird.

Die Getriebeeinheit kann in kompakter Ausführung verwirklicht werden, so dass bei geringem Raumbedarf auch ein Getriebe mit einer Parallelschaltung mehrerer Getriebe möglich ist, wobei die Hertzsche Pressung im Kontakt zwischen den jeweiligen Rollen und Kugelflächen gering gehalten wird.

Es treten nur geringe Blindkräfte auf, die nicht zur Drehmomentübertragung beitragen. Die Lagerkräfte können gering gehalten werden. Hierdurch werden ein hoher Wirkungsgrad und eine kostengünstige Herstellung begünstigt.

Das erläuterte Getriebe gestattet die Realisierung hoher Übersetzungsverhältnisse. Sowohl koaxiale Ausführungen als auch Ausführungen mit Achsversatz können verwirklicht werden, wie nachfolgend noch erläutert wird. Insbesondere eignet sich das Getriebe auch als Torque Vectoring Differenzial, also für eine gesteuerte Momentenverteilung an den angetriebenen Rädern, wobei Verlustleistungen durch Kupplungen vermieden werden. Das Getriebe kann auch im Stillstand verstellt werden.

Zu der Erfindung ist noch anzumerken, dass unter der genannten drehfesten Verbindung der ersten Welle mit der Kugelfläche eine unmittelbare oder indirekte Verbindung zu verstehen ist, die die Übertragung eines Drehmoments zwischen der ersten Welle und der Kugelfläche ermöglicht, wobei jedoch die Achse der ersten Welle und die Drehachse der Kugelfläche verschwenkbar sein können, und/oder wobei die Verbindung selbst wiederum durch ein stufenloses Getriebe der erläuterten Art gebildet sein kann. Entsprechendes gilt für die genannte drehfeste Verbindung der zweiten Welle mit der Rollenanordnung.

Unter einer Welle ist im Zusammenhang mit der Erfindung jedes beliebige Drehmomentübertragungsmittel zu verstehen. Insbesondere muss dieses Drehmomentübertragungsmittel nicht unbedingt stangenförmig sein.

Um zu vermeiden, dass auf die zweite Welle axiale Kräfte übertragen werden, ist es bevorzugt, wenn die Rollenachsen in einer jeweiligen Normalebene der zweiten Welle bzw. in einer jeweiligen Normalebene der Drehachse der Rollenanordnung liegen. Vorzugsweise enthalten die Mittenebenen der Rollen die Drehachse der Rollenanordnung, d.h. bezüglich einer radialen Projektion auf die Drehachse der Rollenanordnung verlaufen die Rollenachsen senkrecht zu der Drehachse der Rollenanordnung.

Für eine wirksame Drehmomentübertragung ist es bevorzugt, wenn die Rollen der zweiten Welle die Kugelfläche der ersten Welle umfänglich umgeben. Vorzugsweise sind die Rollen entlang des Großkreises der Kugelfläche angeordnet, der in der Normalebene der zweiten Welle liegt. Es ist jedoch auch möglich, dass die Rollen an der Kugelfläche entlang mehrerer Kreise angeordnet sind, die in verschiedenen, zueinander beabstandeten Normalebenen der zweiten Welle liegen. Beispielsweise können die Rollen versetzt zueinander in einer Zick-Zack-Anordnung vorgesehen sein.

Die an der zweiten Welle gelagerten Rollen können zylinderförmig (auch als Räder), tonnenförmig (mit konvexer oder konkaver Mantelfläche) oder ballig ausgestaltet sein. Vorzugsweise sind die Rollen massiv, es ist jedoch auch eine hohle Ausgestaltung möglich.

Auch für die mit der ersten Welle verbundene Kugelfläche sind unterschiedliche Ausgestaltungen möglich:
(a) Die Kugelfläche kann durch die Oberfläche einer Vollkugel oder Hohlkugel gebildet sein, die einstückig mit der ersten Welle ausgebildet oder an der ersten Welle drehfest befestigt ist.
(b) Alternativ hierzu kann die Kugelfläche durch die Oberfläche einer zumindest einseitig offenen Hohlkugel gebildet sein, die gemeinsam mit der ersten Welle ein homokinetisches Gelenk bildet. Hierdurch wird eine drehfeste Kopplung der Kugelfläche mit der ersten Welle realisiert, wobei jedoch ein Verschwenken der Drehachse der Kugelfläche relativ zu der Achse der ersten Welle möglich ist, um den Beugungswinkel zwischen der Drehachse der Kugelfläche und der Achse der zweiten Welle zu verändern und somit die Getriebeübersetzung zu variieren. Durch die Kombination der Getriebeeinheit mit einem homokinetischen Gelenk ist somit eine gehäusefeste Lagerung sowohl der ersten Welle als auch der zweiten Welle möglich, und dennoch lässt sich die Getriebeübersetzung stufenlos variieren.
(c) Ferner ist es möglich, dass die Kugelfläche, an der die Rollen der zweiten Welle anliegen, durch die Innenseite einer zumindest einseitig offenen Hohlkugel gebildet ist. Hierdurch ist eine besonders kompakte Bauweise der Getriebeeinheit möglich. Die Erfindung bezieht sich auch auf ein Getriebe, bei der mehrere Getriebeeinheiten der erläuterten Art miteinander kombiniert werden. Insbesondere kann ein derartiges Getriebe wenigstens eine erste und eine zweite Getriebeeinheit aufweisen, wobei jeweils wenigstens eine Welle der ersten Getriebeeinheit und der zweiten Getriebeeinheit gehäusefest gelagert ist, und wobei die jeweilige andere Welle der ersten Getriebeeinheit direkt mit der jeweiligen anderen Welle der zweiten Getriebeeinheit kraftschlüssig und insbesondere formschlüssig verbunden ist, beispielsweise über Stirnräder, Kegelräder oder Tellerräder.

Beispielsweise kommen die folgenden Ausführungen in Betracht, wie nachfolgend in Zusammenhang mit der Figurenbeschreibung noch ausführlicher erläutert wird:
(A) Das Getriebe kann zumindest eine erste und eine zweite Getriebeeinheit aufweisen, wobei die erste Welle der ersten Getriebeeinheit (Welle mit Kugelfläche) mit der ersten Welle der zweiten Getriebeeinheit (ebenfalls Welle mit Kugelfläche) kraftschlüssig direkt verbunden ist, oder wobei die zweite Welle der ersten Getriebeeinheit (Welle mit Rollen) mit der zweiten Welle der zweiten Getriebeeinheit (ebenfalls Welle mit Rollen) kraftschlüssig direkt verbunden ist. Mit anderen Worten sind die beiden Getriebeeinheiten für eine einander entgegen gerichtete Übersetzung gekoppelt.
   Hierdurch kann das Getriebe beispielsweise als Ausgleichsgetriebe mit stufenlos einstellbarer Drehmomentverteilung ausgebildet sein, wobei es von Vorteil ist, wenn bei beiden Getriebeeinheiten die jeweilige erste Welle mit der jeweiligen Kugelfläche ein homokinetisches Gelenk bildet, so dass sämtliche Wellen der beiden Getriebeeinheiten an einem gemeinsamen Gehäuse gehäusefest gelagert sein können.
(B) Alternativ hierzu kann das Getriebe zumindest eine erste und eine zweite Getriebeeinheit aufweisen, wobei die die Rollen tragende zweite Welle der ersten Getriebeeinheit mit der mit der Kugelfläche verbundenen ersten Welle der zweiten Getriebeeinheit direkt gekoppelt ist, um ein Drehmoment zwischen diesen beiden Wellen zu übertragen. Aufgrund dieser Anordnung bewirken die beiden Getriebeeinheiten eine gleichartige Übersetzung, d.h. eine zweifache Übersetzung ins Langsame oder eine zweifache Übersetzung ins Schnelle. Die beiden genannten Wellen der verschiedenen Getriebeeinheiten sind vorzugsweise drehfest verbunden, beispielsweise über ein Zahnradpaar, eine Kette oder einen Zahnriemen, und sie können relativ zueinander entweder starr angeordnet sein (Verbindung z.B. über Stirnradgetriebe), oder verschwenkbar (Verbindung z.B. über tonnenförmige Stirnräder).

Weitere Ausführungsformen der Erfindung sind in den Unteransprüchen genannt.

Die Erfindung wird nachfolgend lediglich beispielhaft unter Bezugnahme auf die Zeichnungen erläutert.
- Fig. 1: zeigt eine schematische Seitenansicht einer Getriebeeinheit.
- Fig. 2a bis 2c: zeigen unterschiedliche Anordnungen einer Getriebeeinheit.
- Fig. 2d und 2e: zeigen verschiedene Getriebe mit zwei miteinander gekoppelten Getriebeeinheiten mit Achsversatz.
- Fig. 2f: zeigt ein weiteres Getriebe mit zwei miteinander gekoppelten Getriebeeinheiten in koaxialer Anordnung von Antrieb und Abtrieb.
- Fig. 3a: zeigt ein Ausgleichsgetriebe mit zwei miteinander gekoppelten Getriebeeinheiten in koaxialer Anordnung.
- Fig. 3b und 3c: zeigen eine Getriebeeinheit des Getriebes gemäß Fig. 3a in unterschiedlichen Stellungen der verwendeten Verstelleinrichtung.
- Fig. 3d: zeigt ein Getriebe mit mehreren Getriebeeinheiten gemäß Fig. 3b und 3c.
- Fig. 4a bis 4c: zeigen ein weiteres Getriebe mit zwei Getriebeeinheiten in koaxialer Anordnung.
- Fig. 5a und 5b: zeigen eine weitere Ausführungsform einer Getriebeeinheit für unterschiedlich eingestellte Übersetzungen.
- Fig. 5c: zeigt ein Getriebe mit zwei gekoppelten Getriebeeinheiten gemäß Fig. 5a und 5b.
- Fig. 6a und 6b: zeigen eine weitere Ausführungsform einer Getriebeeinheit für unterschiedlich eingestellte Übersetzungen.
- Fig. 7a und 7b: zeigen eine Ausführungsform einer Getriebeeinheit mit mehreren kombinierten Getriebestufen, und zwar für unterschiedlich eingestellte Übersetzungen.
- Fig. 8a und 8b: zeigen eine weitere Ausführungsform einer Getriebeeinheit mit mehreren kombinierten Getriebestufen.

Fig. 1 illustriert das Funktionsprinzip einer Getriebeeinheit 11 des erfindungsgemäßen stufenlosen Getriebes. Die Getriebeeinheit 11 besitzt eine erste Welle 13, die eine Kugelfläche 15 zu einer Drehbewegung um eine Achse S₁ antreibt. Der Mittelpunkt der Kugelfläche 15 liegt auf der Achse der ersten Welle 13. In dem gezeigten Ausführungsbeispiel ist die Kugelfläche 15 die Oberfläche einer massiv ausgebildeten Kugel.

Ferner besitzt die Getriebeeinheit 11 eine zweite Welle 17, deren Achse ebenfalls durch den Mittelpunkt der Kugelfläche 15 verläuft. An der zweiten Welle 17 sind über einen Rollenträger 19 (z.B. mehrere Haltearme) mehrere Rollen 21 drehbar gelagert. Der Rollenträger 19 selbst ist um eine Drehachse S₂ drehbar, die in dem gezeigten Beispiel der Achse der zweiten Welle 17 entspricht. Die Rollen 21 liegen an der Kugelfläche 15 reibschlüssig an. Die Berührungspunkte, an denen die Rollen 21 an der Kugelfläche 15 anliegen, liegen in dem gezeigten Beispiel auf einem gemeinsamen Großkreis 23 der Kugelfläche 15, der in einer Normalebene der Achse S₂ liegt. In der vereinfachten Darstellung gemäß Fig. 1 sind nicht sämtliche Rollen 21 gezeigt. Vorzugsweise sind die Rollen 21 bezüglich der zweiten Welle 17 jedoch in gleicher Teilung an der Kugelfläche 15 angeordnet, wobei der Rollenträger 19 mit den Rollen 21 beispielsweise einen Rollenkäfig bilden können.

Die Drehachsen der Rollen 21 liegen in der Normalebene der Drehachse S₂ der Anordnung 19 der Rollen 21, in der auch der Mittelpunkt der Kugelfläche 15 liegt. Die Mittenebenen der Rollen 21 enthalten die Achse S₂. Die Rollen 21 gestatten somit ein Verschwenken der zweiten Welle 17 relativ zu der ersten Welle 13 und der Kugelfläche 15 um einen Beugungswinkel α, wobei die Schwenkachse durch den Mittelpunkt der Kugelfläche 15 verläuft. Die Rollen 21 rollen bei einer derartigen Schwenkbewegung an der Kugelfläche 15 ab. Beispielsweise kann die in Fig. 1 an unterster Position gezeigte Rolle 21 aufgrund einer derartigen Verschwenkung auch die gestrichelt eingezeichnete Position 21' einnehmen.

Die Winkelgeschwindigkeit ω₁ der ersten Welle 13 bzw. der Kugelfläche 15 und die Winkelgeschwindigkeit ω₂ der zweiten Welle 17 stehen in fester Beziehung, wobei das Drehzahlverhältnis ω_{2/}ω₁ - also die Getriebeübersetzung i - stufenlos verändert werden kann, wie im Folgenden erläutert wird.

Aufgrund des Reibschlusses zwischen den Rollen 21 und der Kugelfläche 15 kann zwischen der ersten Welle 13 und der zweiten Welle 17 ein Drehmoment übertragen werden. Zwischen den Rollen 21 und der Kugelfläche 15 tritt dabei kein Primärschlupf auf. Sofern zwischen der Drehachse S₁ der Kugelfläche 15 und der Drehachse S₂ des Rollenträgers 19 ein von Null verschiedener Beugungswinkel α eingestellt ist, rollen während einer Drehbewegung der Wellen 13, 17 die Rollen 21 entlang der Kugelfläche 15 letztlich nach Art einer Pendelbewegung hin und her, und es tritt lediglich Bohrschlupf auf, da die Kugelfläche 15 und die Rollen 21 eine Drehbewegung relativ zueinander ausführen. Die Übertragung des Drehmoments erfolgt durch hinreichendes radiales Anpressen der Rollen 21 an die Kugelfläche 15, beispielsweise durch mechanische, hydraulische oder elektrische Mittel (Wärmedehnung, Piezokristalle). Für eine wirksame Drehmomentübertragung können die Kugelfläche 15 und die Rollen 21 auf an sich bekannte Weise aus Stahl gefertigt und vergütet sein.

Verschiedene Übersetzungen ergeben sich dadurch, dass die Kugelfläche 15 und die hieran anliegenden Rollen 21 in Abhängigkeit von dem eingestellten Beugungswinkel α unterschiedlichen Bewegungsrichtungen folgen. Die unterschiedlichen Geschwindigkeitsbeträge werden aus einer Betrachtung der Geschwindigkeitsvektoren deutlich. Fig. 1 zeigt für einen Punkt an der Oberfläche der Kugelfläche 15, an dem zu dem dargestellten Zeitpunkt eine Rolle 21 anliegt, die Bewegungsgeschwindigkeit v₁. Diese ist in der Normalebene der Drehachse S₁ der Kugelfläche 15 tangential zu der Kugelfläche 15 gerichtet und besitzt den Betrag v₁ = ω₁ * r, wobei r den Radius der Kugelfläche 15 bezeichnet.

Die zunächst an demselben Punkt der Kugelfläche 15 anliegende Rolle 21 bewegt sich hingegen entlang des Großkreises 23. Aus dem in Fig. 1 gezeigten Vektordiagramm ergibt sich für diese Rolle 21 eine Bewegungsgeschwindigkeit v₂ = v₁ * cos(α) = ω₁ * r * cos(α). Da für die Geschwindigkeit der betreffenden Rolle 21 zugleich die Beziehung v₂ = ω₂ * r gilt, ergibt sich für die Getriebeeinheit 11 die Übersetzung i = ω₂/ω₁ = cos(α).

Die Übersetzung ist somit abhängig von dem Beugungswinkel α. Der Beugungswinkel α kann während der Rotation der ersten Welle 13 und der zweiten Welle 17 geändert werden, so dass hierdurch die Übersetzung i der Getriebeeinheit 11 stufenlose variiert wird. Beispielsweise sind Beugungswinkel bis zu α = 68° möglich, entsprechend einer Übersetzung von i = 0,37.

Zu der erläuterten Getriebeeinheit 11 ist noch anzumerken, dass die Kugelfläche 15 glatt, d.h. sphärisch bzw. ohne Vertiefungen oder Erhebungen ausgebildet ist. Hierdurch besteht im Unterschied beispielsweise zu bekannten homokinetischen Gelenken (Gleichlaufgelenken) keine starre Kopplung der Winkelgeschwindigkeiten der ersten Welle 13 mit Kugelfläche 15 einerseits und der zweiten Welle 17 mit den Rollen 21 andererseits. Diese glatte Ausbildung ist zumindest in demjenigen Bereich der Kugelfläche 15 erforderlich, in dem sich die Rollen 21 für unterschiedliche Beugungswinkel α bewegen.

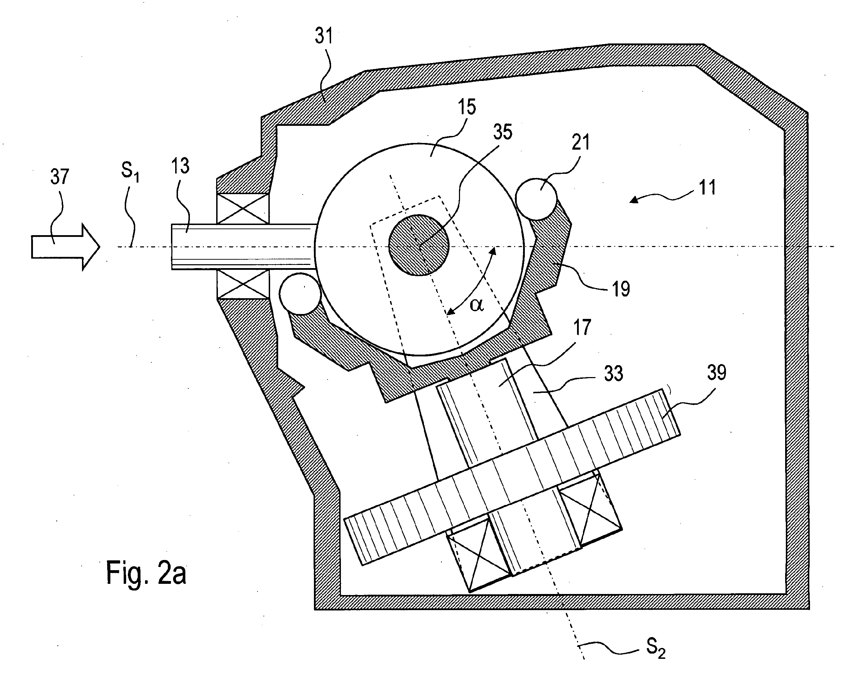

Fig. 2a bis 2c zeigen mögliche Anordnungen der Getriebeeinheit 11 gemäß Fig. 1 in einem Gehäuse 31.

Bei der Ausführungsform gemäß Fig. 2a ist die erste Welle 13 gehäusefest drehbar gelagert. Die zweite Welle 17 hingegen ist an einem Schwenkbügel 33 gelagert, der um eine Schwenkachse 35 schwenkbar ist, die durch den Mittelpunkt der Kugelfläche 15 verläuft. Die Anlenkung des Schwenkbügels 33 am Gehäuse 31 ist als schraffierter Kreis dargestellt.

Die erste Welle 13 dient als Antrieb 37 für eine Übersetzung ins Langsame. An der zweiten Welle 17 ist ein Zahnrad 39 vorgesehen, über das das von den Rollen 21 aufgenommene Drehmoment weitergeleitet werden kann.

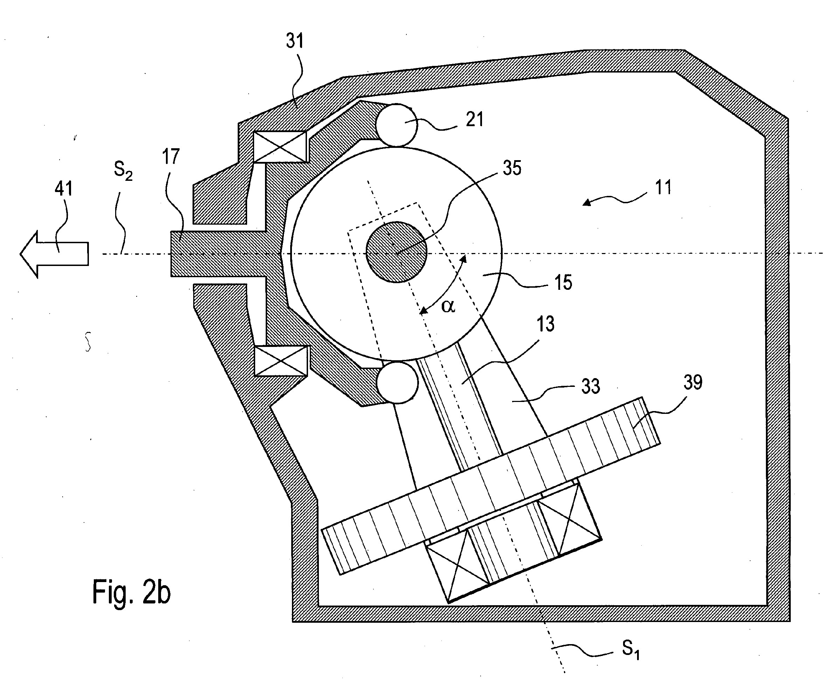

Fig. 2b zeigt eine ähnliche Anordnung, bei der im Vergleich zu der Anordnung gemäß Fig. 2a die erste Welle 13 und die zweite Welle 17 vertauscht sind. Die zweite Welle 17 dient somit als Abtrieb 41.

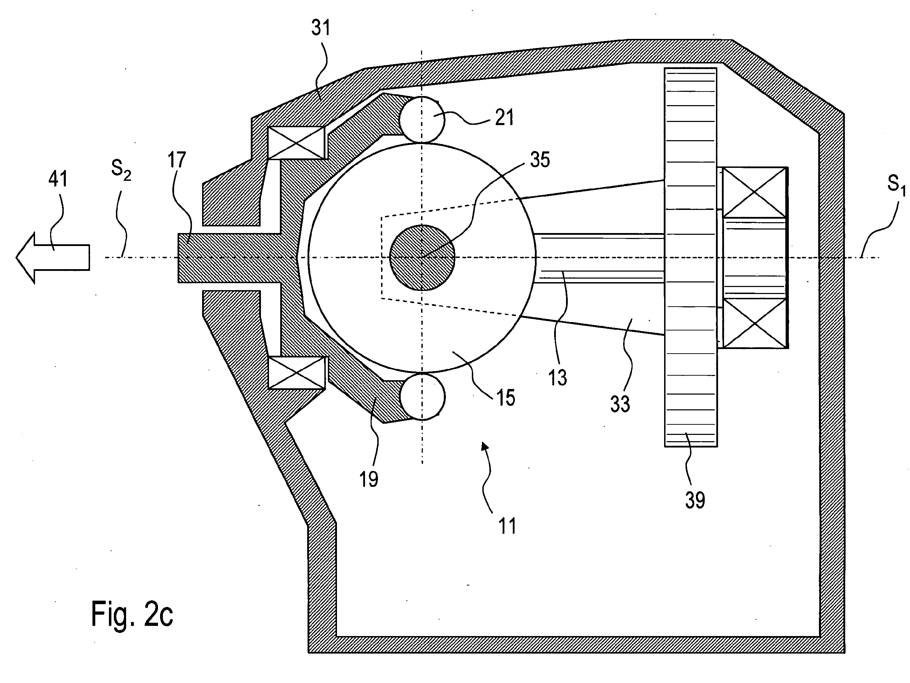

Die Darstellung gemäß Fig. 2c entspricht der Ausführung gemäß Fig. 2b, wobei die erste Welle 13 und die zweite Welle 17 koaxial ausgerichtet sind (Beugungswinkel α = 0, Übersetzung i = 1).

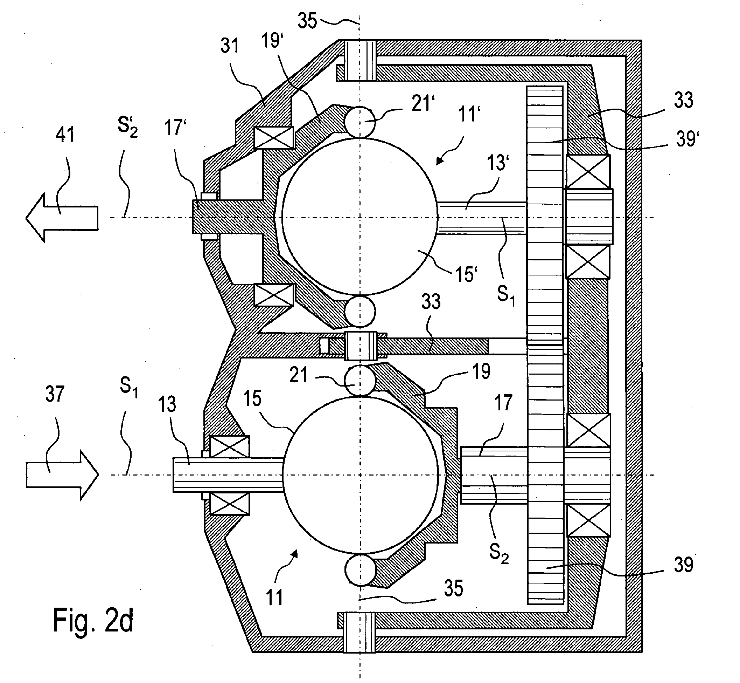

Fig. 2d zeigt eine Kombination der Anordnungen gemäß Fig. 2a und gemäß Fig. 2b, 2c. Durch diese Kombination ist ein stufenloses Getriebe mit einer ersten Getriebeeinheit 11 und einer zweiten Getriebeeinheit 11' gebildet, das mit Achsversatz realisiert ist und kurz baut, und das sich deshalb insbesondere für Kraftfahrzeuge mit Front-Quer-Antrieb eignet.

Die zweite Welle 17 der ersten Getriebeeinheit 11 ist mit der ersten Welle 13' der zweiten Getriebeeinheit 11' kraftschlüssig verbunden, nämlich formschlüssig über die als Stirnräder ausgebildeten Zahnräder 39, 39'.

Hierdurch erfolgt zwischen Antrieb 37 und Abtrieb 41 zweimal eine Übersetzung ins Langsame. Die erste Welle 13 der ersten Getriebeeinheit 11 und die zweite Welle 17' der zweiten Getriebeeinheit 11' sind um gehäusefeste Drehachsen drehbar gelagert und verlaufen parallel zueinander.

Die zweite Welle 17 der ersten Getriebeeinheit 11 und die erste Welle 13' der zweiten Getriebeeinheit 11' sind in paralleler Ausrichtung an einem gemeinsamen Schwenkbügel 35 gelagert, so dass die Zahnräder 39, 39' stets kämmen. Zur simultanen Veränderung der jeweiligen Übersetzung der beiden Getriebeeinheiten 11, 11' kann der Schwenkbügel 33 um eine Schwenkachse 35 verschwenkt werden, die durch den Mittelpunkt der Kugelfläche 15 der ersten Getriebeeinheit 11 und den Mittelpunkt der Kugelfläche 15' der zweiten Getriebeeinheit 11' verläuft. Die Schwenkachse 35 steht hierbei senkrecht zu den Achsen der gehäusefest drehbar gelagerten Wellen 13, 17' und somit auch senkrecht zu den Achsen der verschwenkbaren Wellen 13', 17. Durch ein Verschwenken des Schwenkbügels 33 wird bei jeder Getriebeeinheit 11, 11' der Winkel zwischen der Drehachse S₁, S_{1'} der jeweiligen Kugelfläche 15, 15' und der Achse S₂, S_{2'} der jeweiligen zweiten Welle 17, 17' geändert, so dass für jede Getriebeeinheit 11, 11' die Übersetzung nach der im Zusammenhang mit Fig. 1 bereits erläuterten Cosinus-Beziehung stufenlos variiert wird.

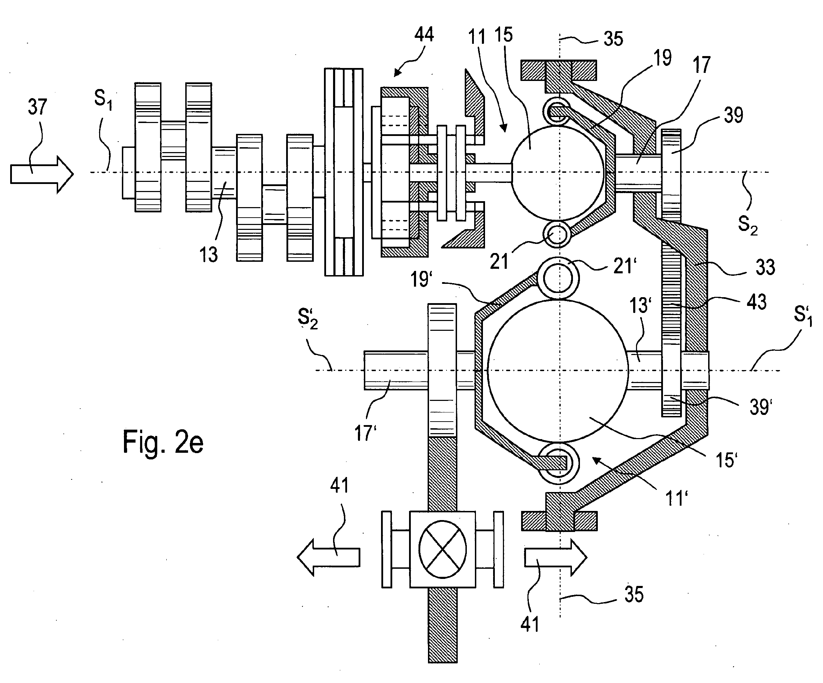

Fig. 2e zeigt eine Ausführungsform, die vom Prinzip jener gemäß Fig. 2d entspricht. Allerdings sind die Zahnräder 39, 39' hier über eine Kette 43 formschlüssig miteinander verbunden. Weitere Einzelheiten sind gezeigt, beispielsweise ein zwischen die Welle 13 und die erste Getriebeeinheit 11 geschaltetes Wendegetriebe 44.

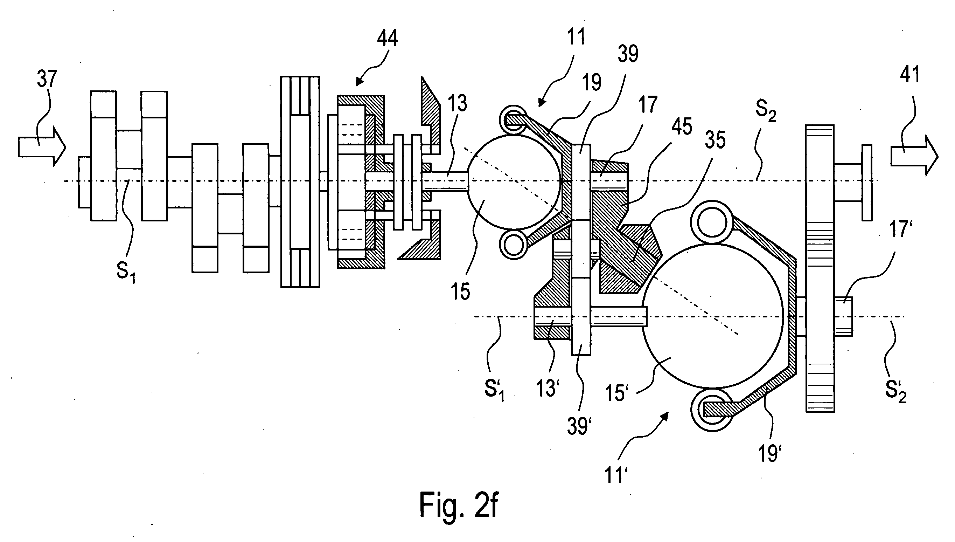

Die in Fig. 2d und 2e gezeigte Hintereinanderschaltung mehrerer Teilübersetzungen ist auch in koaxialer Bauweise für einen Standardantrieb möglich, beispielsweise durch Verwendung einer Schwenkeinrichtung 45 mit einer Schwenkachse 35, die schräg zu den Achsen der gehäusefest gelagerten Wellen 13, 17' und auch schräg zu den Achsen der schwenkbaren Wellen 17, 13' verläuft, wie dies in Fig. 2f gezeigt ist. Auch bei dieser Ausführungsform sind die schwenkbaren Wellen 17, 13' der beiden Getriebeeinheiten 11, 11' über Zahnräder 39, 39' formschlüssig miteinander verbunden, wobei eine 1:1 Übersetzung realisiert ist, um einen Momentausgleich zu erzielen. In dem in Fig. 2f gezeigten Zustand beträgt der Beugungswinkel (α,α') für beide Getriebeeinheiten 11, 11' Null, es ist also eine Übersetzung i = 1 eingestellt. Durch Drehen der Schwenkeinrichtung 45 um die Achse 35 wird für beide Getriebeeinheiten 11, 11' eine Übersetzung ins Langsame (i < 1) eingestellt.

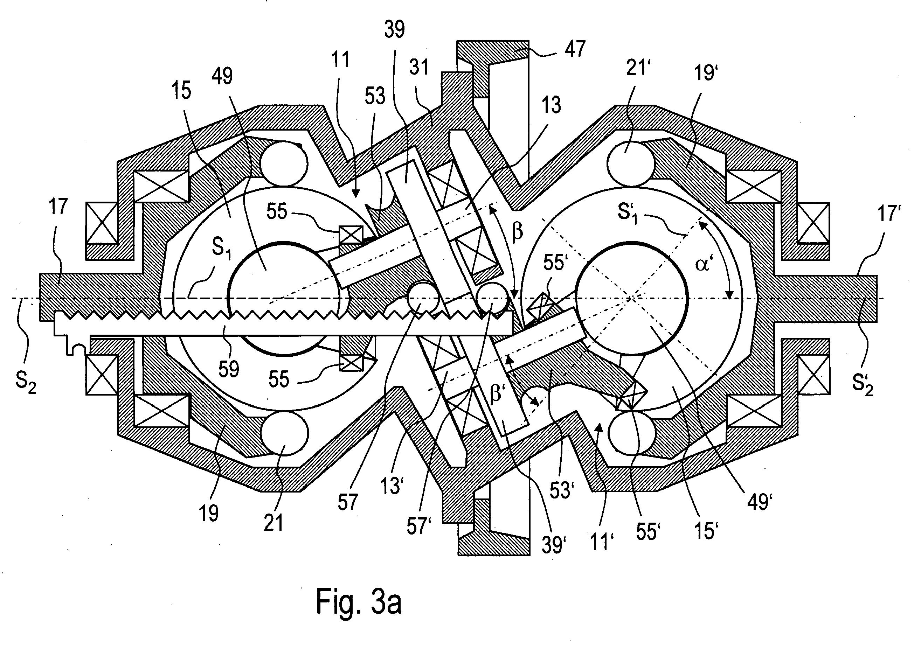

Fig. 3a zeigt ein Ausführungsbeispiel eines Ausgleichsgetriebes mit zwei Getriebeeinheiten 11, 11' mit einstellbarer Drehmomentverteilung an zwei koaxialen Wellen 17, 17'.

Das Getriebe besitzt ein drehbar gelagertes Gehäuse 31. An diesem sind die erste Welle 13, 13' und die zweite Welle 17, 17' der ersten und der zweiten Getriebeeinheit 11, 11' gehäusefest drehbar gelagert. Die erste Welle 13 der ersten Getriebeeinheit 11 ist mit der ersten Welle 13' der zweiten Getriebeeinheit 11' über Stirnräder 39, 39' drehfest gekoppelt. Die Achsen der ersten Wellen 13, 13' sind bezüglich der Drehachse des Gehäuses 31 schräg ausgerichtet. Die genannten zweiten Wellen 17, 17' sind in zueinander entgegengesetzter Richtung koaxial aus dem Gehäuse 31 herausgeführt. Das Gehäuse 31 ist koaxial zu der gemeinsamen Achse S₂, S₂' der zweiten Wellen 17, 17' drehbar gelagert und ist mittels eines Tellerrads 47 zu einer Drehbewegung antreibbar.

Die jeweilige erste Welle 13, 13' der Getriebeeinheiten 11, 11' bzw. hieran ausgebildete Innenkugeln 49, 49' bilden mit der jeweiligen Kugelfläche 15, 15' (Hohlkugeln) in nicht näher dargestellter Weise ein homokinetisches Gelenk (z.B. Rzeppa-Gelenk). Ein solches homokinetisches Gelenk gestattet bei drehfester Beziehung zwischen der jeweiligen ersten Welle 13, 13' und der zugeordneten Kugelfläche 15, 15' ein Verschwenken der Drehachse S₁, S_{1'} der jeweiligen Kugelfläche 15, 15' relativ zu der Achse S₂, S_{2'} der jeweiligen zweiten Welle 17, 17' um einen Beugungswinkel α, α'. Zum Einstellen des jeweiligen Beugungswinkels α, α' ist jeder Kugelfläche 15, 15' eine Verstelleinrichtung 53 bzw. 53' zugeordnet.

Die Verstelleinrichtungen 53, 53' sind um die jeweilige erste Welle 13, 13' drehbar gelagert. Die Verbindung zu den Kugelflächen 15, 15' erfolgt über ein jeweiliges Wälzlager 55, 55', das die betreffende erste Welle 13, 13' in exzentrischer Anordnung umgibt und eine Öffnung der jeweiligen Kugelfläche 15, 15' begrenzt. Die Wälzlager 55, 55' sind an den Verstelleinrichtungen 53, 53' derart geneigt angeordnet, dass die Drehachse der jeweiligen Verstelleinrichtung 53, 53' schräg zu der Drehachse S₁, S_{1'} der jeweiligen Kugelfläche 15, 15' verläuft, nämlich in einem Beugungswinkel β bzw. β'.

Die Verstelleinrichtungen 53, 53' der beiden Getriebeeinheiten 11, 11' sind über ein Schneckengetriebe miteinander gekoppelt. Hierfür ist jede Verstelleinrichtung 53, 53' umfänglich als Schnecke ausgebildet, mit der ein jeweiliges Schneckenrad 57, 57' zusammenwirkt. Die Schneckenräder 57, 57' besitzen Stirnräder (nicht dargestellt), durch die die Schneckenräder 57, 57' über eine Zahnstange 59 formschlüssig miteinander verbunden sind. Ein Verdrehen der Verstelleinrichtung 53 der ersten Getriebeeinheit 11 um die Drehachse der ersten Welle 13 bewirkt nicht nur ein Verstellen des zugeordneten Beugungswinkels α und somit eine stufenlose Änderung der Übersetzung der ersten Getriebeeinheit 11, sondern über das Schneckengetriebe wird auch die Verstelleinrichtung 53' der zweiten Getriebeeinheit 11' verdreht, so dass auch die Übersetzung der zweiten Getriebeeinheit 11' geändert wird. Die Kopplung der Verstelleinrichtungen 53, 53' ist derart gewählt, dass dann, wenn für die erste Getriebeeinheit 11 eine hohe Übersetzung eingestellt ist (geringer Beugungswinkel α), für die zweite Getriebeeinheit 11' eine geringe Übersetzung eingestellt ist (großer Beugungswinkel α'), und umgekehrt.

Durch Drehantrieb des Tellerrads 47 kann ein Drehmoment auf die jeweilige zweite Welle 17, 17' übertragen werden, wobei über die Zahnräder 39, 39' ein Ausgleich des übertragenen Drehmoments zwischen den beiden Wellen 17, 17' erfolgen kann. Die Übersetzung jeder Getriebeeinheit 11, 11' ist gemäß der im Zusammenhang mit Fig. 1 erläuterten Cosinus-Beziehung stufenlos veränderlich, nämlich durch Verdrehen der jeweiligen Verstelleinrichtung 53, 53' und somit durch Verschwenken der Drehachse S₁, S_{1'} der jeweiligen Kugelfläche 15, 15' relativ zu der Achse S₂, S_{2'} der jeweiligen zweiten Welle 17, 17' um den Beugungswinkel α bzw. α'. Hierbei sind die Übersetzungen der beiden Getriebeeinheiten 11, 11' über die Verstelleinrichtungen 53, 53' und das erläuterte Schneckengetriebe (Schneckenräder 57, 57' mit Stirnrädern; Zahnstange 59) gekoppelt.

Da die Zahnstange 59 als Steuereinrichtung aus dem Gehäuse 31 herausgeführt ist, kann durch gleichsinniges Drehen der Schneckenräder 57, 57' mittels der Zahnstange 59 die Drehmomentverteilung zwischen den beiden zweiten Wellen 17, 17' von außen aktiv gesteuert werden. Das gezeigte Getriebe eignet sich somit insbesondere als Torque Vectoring Differenzial.

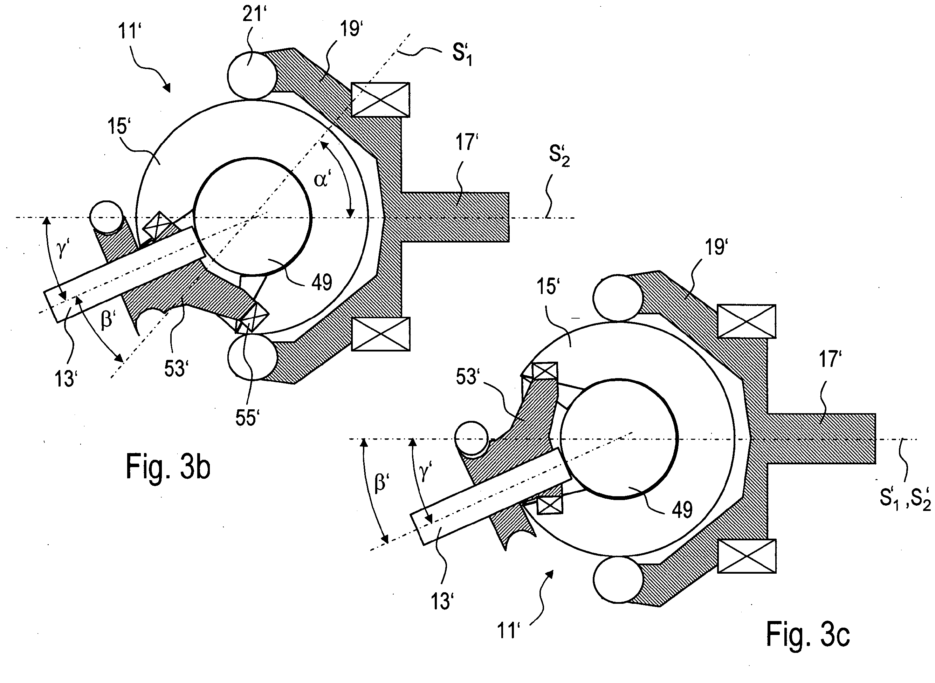

Fig. 3b und 3c zeigen Teile der Getriebeeinheit 11' des Getriebes gemäß Fig. 3a in unterschiedlichen Stellungen der Verstelleinrichtung 53'. In dem Zustand gemäß Fig. 3b sind der maximale Beugungswinkel α' zwischen der Drehachse S_{1'} der Kugelfläche 15' und der Achse S_{2'} der zweiten Welle 17' und somit die geringstmögliche Übersetzung i eingestellt. In Fig. 3b ist ferner der Neigungswinkel γ' zwischen der gehäusefest drehbar gelagerten ersten Welle 13' und der gehäusefest drehbar gelagerten zweiten Welle 17' gezeigt. Dieser Neigungswinkel γ' entspricht betragsmäßig dem Beugungswinkel β zwischen der Drehachse der Verstelleinrichtung 53' und der Drehachse S_{1'} der Kugelfläche 15'. Der in Fig. 3b gezeigte maximale Beugungswinkel α' entspricht also dem doppelten Neigungswinkel γ'.

In dem Zustand gemäß Fig. 3c hingegen ist durch entsprechendes Verdrehen der Verstelleinrichtung 53' eine Übersetzung i = 1 eingestellt, d.h. die Drehachse S₁' der Kugelfläche 15' und die Drehachse S₂' der zweiten Welle 17' fallen zusammen (Beugungswinkel α' = 0).

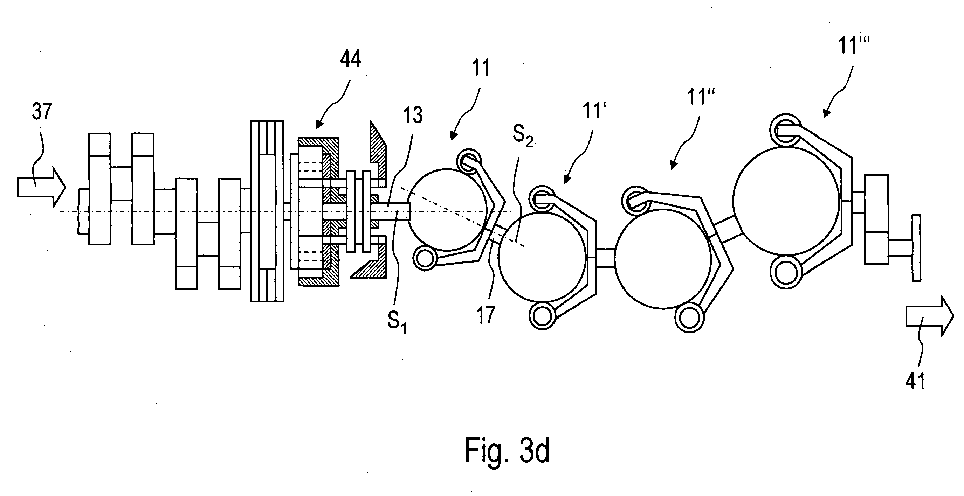

Fig. 3d zeigt ein stufenloses Getriebe für einen Standardantrieb mit beispielsweise vier hintereinander geschalteten Getriebeeinheiten 11, 11', 11" und 11"'. Diese Getriebeeinheiten 11, 11', 11'', 11''' sind von dem im Zusammenhang mit Fig. 3a bis 3c bereits erläuterten Typ, d.h. bei jeder Getriebeeinheit sind die jeweilige erste Welle 13 und zweite Welle 17 gehäusefest drehbar gelagert, und die jeweilige Kugelfläche 15 bildet gemeinsam mit der zugeordneten ersten Welle 13 ein homokinetisches Gelenk. Die jeweilige erste Welle der Getriebeeinheiten 11', 11", 11'" (Antriebsseite) entspricht der zweiten Welle - also der Abtriebsseite - der jeweils vorgeschalteten Getriebeeinheit oder ist mit dieser gekoppelt. Die Übersetzung jeder Getriebeeinheit 11, 11', 11'', 11''' ist mittels einer Verstelleinrichtung einstellbar (Verstelleinrichtung 53, 53' gemäß Fig. 3a bis 3c; in Fig. 3d nicht gezeigt). Aufgrund der Hintereinanderschaltung der Getriebeeinheiten 11, 11', 11'', 11''' wird die jeweilige Einzelübersetzung entsprechend potenziert, so dass beispielsweise für einen Beugungswinkel α = 50° eine stufenlos einstellbare Gesamtübersetzung von bis zu i = 1/5,86 erreichbar ist.

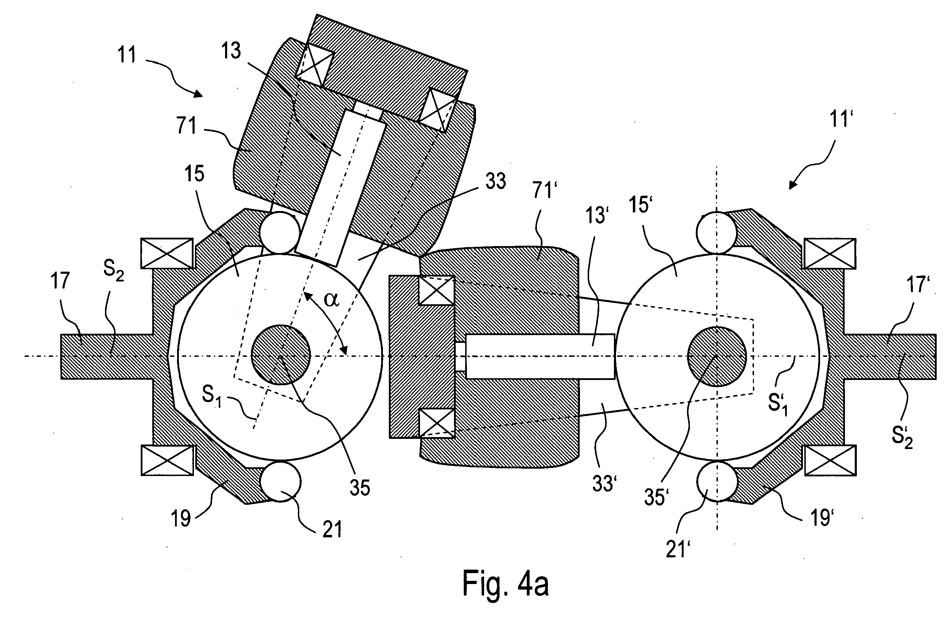

Fig. 4a bis 4c zeigen eine weitere Ausführungsform eines Getriebes mit koaxialem Aufbau und veränderlicher Drehmomentverteilung bzw. Übersetzung. Auch bei dieser Ausführungsform sind zwei miteinander verbundene Getriebeeinheiten 11, 11' mit dem Aufbau gemäß Fig. 1 vorgesehen. Die jeweilige zweite Welle 17, 17' der beiden Getriebeeinheiten 11, 11' ist gehäusefest drehbar gelagert. Die jeweilige erste Welle 13, 13' ist mittels eines jeweiligen Schwenkbügels 33, 33' schwenkbar gelagert, ähnlich wie in Zusammenhang mit Fig. 2a erläutert. Die Schwenkachsen 35 bzw. 35' der beiden Schwenkbügel 33, 33' liegen im Mittelpunkt der Kugelfläche 15 bzw. 15' der jeweiligen Getriebeeinheit 11, 11' und verlaufen parallel zueinander.

Die kraftschlüssige Verbindung der jeweiligen ersten Welle 13, 13' der beiden Getriebeeinheiten 11, 11' erfolgt über tonnenförmige Stirnräder 71, 71', wobei die Stirnräder 71,71' mittels einer nicht gezeigten Andrückeinrichtung in Eingriff gehalten werden.

Aufgrund der tonnenförmigen Ausbildung bleiben die Stirnräder 71, 71' innerhalb eines weiten Schwenkbereichs in Eingriff. Hierdurch ist es möglich, durch Verschwenken der Schwenkbügel 33, 33' und somit der ersten Wellen 13, 13' simultan für beide Getriebeeinheiten 11, 11' den jeweiligen Beugungswinkel α bzw. α' zwischen der Drehachse S₁, S_{1'} der jeweiligen Kugelfläche 15, 15' und der Achse S₂, S_{2'} der jeweiligen zweiten Welle 17, 17' zu verändern. Hierdurch wird gemäß der im Zusammenhang mit Fig. 1 erläuterten Cosinus-Beziehung die Momentenverteilung zwischen den beiden zweiten Wellen 17, 17' bzw. die Gesamtübersetzung des Getriebes stufenlos verändert.

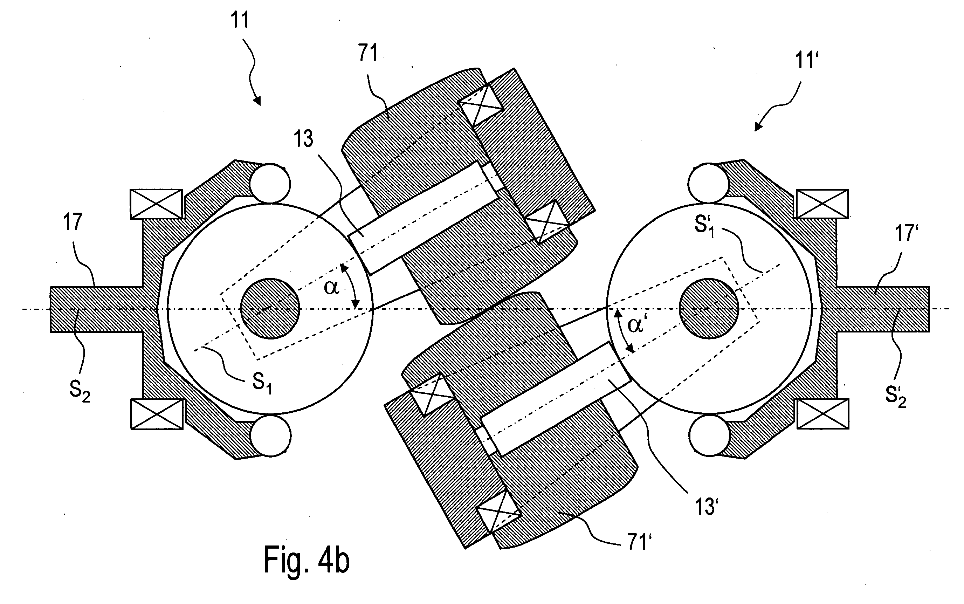

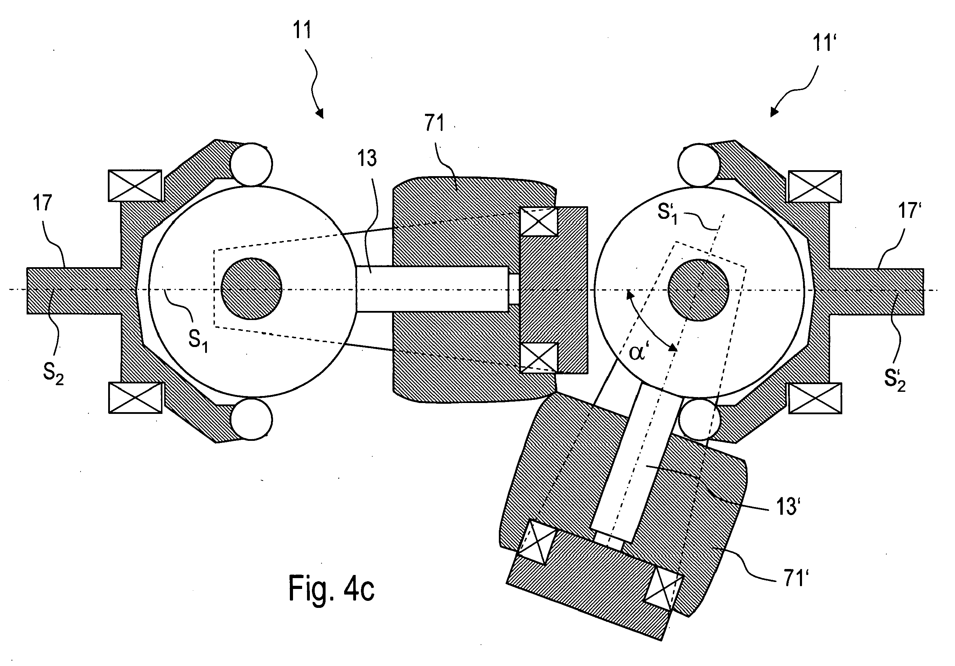

Fig. 4a zeigt eine Extremstellung, bei der die zweite Welle 17 der ersten Getriebeeinheit 11 mit geringerer Drehzahl als die zweite Welle 17' der zweiten Getriebeeinheit 11' rotiert. Bei der symmetrischen Stellung der Schwenkbügel 33, 33' gemäß Fig. 4b rotieren die beiden zweiten Wellen 17, 17' mit gleicher Drehzahl (Übersetzung i = 1). In der Extremstellung gemäß Fig. 4c ist die Drehzahl der zweiten Welle 17 höher als die Drehzahl der zweiten Welle 17'.

Zu den Ausführungsformen gemäß Fig. 3a und gemäß Fig. 4a bis 4c ist anzumerken, dass anstelle der ersten Wellen 13, 13' in entsprechender Anordnung auch die zweiten Wellen 17, 17' der beiden Getriebeeinheiten 11, 11' über die gezeigten Stirnräder 39, 39' bzw. 71, 71' miteinander verbunden sein können.

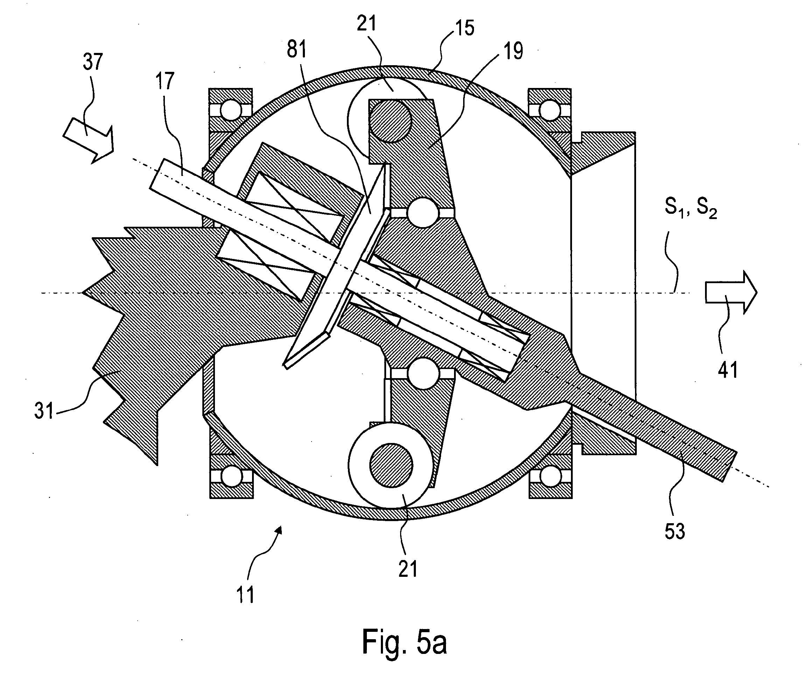

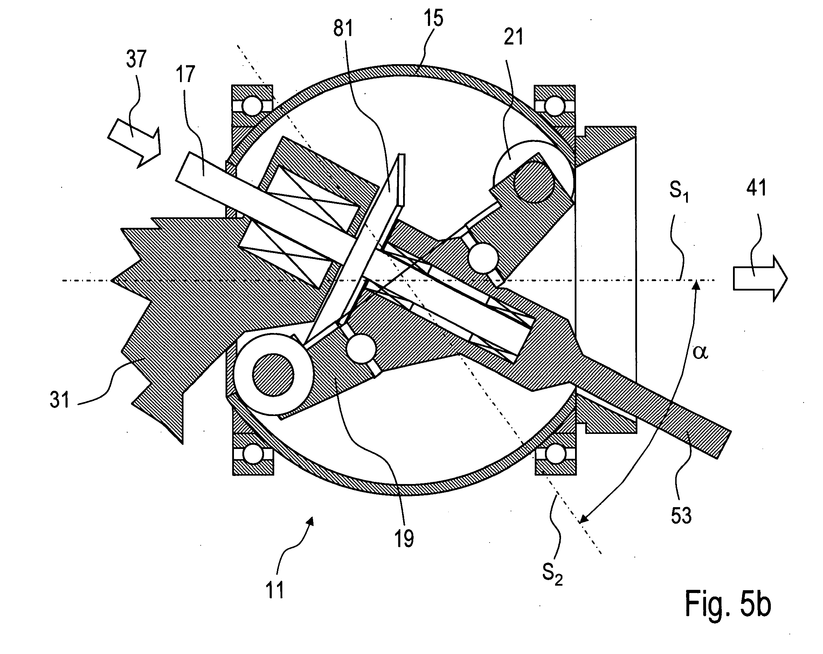

Fig. 5a und 5b zeigen eine weitere Ausführungsform einer Getriebeeinheit 11 mit stufenlos veränderbarer Übersetzung. Bei dieser Ausführungsform ist eine Antriebswelle 17, die an einem Abschnitt eines Gehäuses 31 gelagert ist, mit einem Kegelrad 81 verbunden. Das Kegelrad 81 kämmt mit einer entsprechenden Verzahnung eines im Wesentlichen ringförmigen Rollenträgers 19, an dem mehrere Rollen 21 gelagert sind. Der Rollenträger 19 ist gemeinsam mit den Rollen 21 um eine Achse S₂ drehbar gelagert. Hierfür ist der Rollenträger 19 an einer Verstelleinrichtung 53 drehbar gelagert, die wiederum um die Achse der Welle 17 drehbar gelagert ist. Die Drehachse S₂ des Rollenträgers 19 und die Drehachse der Verstelleinrichtung 53 verlaufen schräg zueinander.

Eine als Hohlkugel ausgebildete Kugelfläche 15 ist bezüglich einer Drehachse S₁ ebenfalls gehäusefest drehbar gelagert, wobei die Kugelfläche 15 mit einer Abtriebswelle (nicht gezeigt) drehfest gekoppelt ist. Die Rollen 21 liegen an der Innenseite der Kugelfläche 15 reibschlüssig an.

Aufgrund der gezeigten Anordnung ist der Rollenträger 19 über das Kegelrad 81 mit der Welle 17 drehfest verbunden. Über die an der Kugelfläche 15 anliegenden Rollen 21 kann somit ein Drehmoment auf die Kugelfläche 15 und die hiermit verbundene Abtriebswelle übertragen werden. Durch Änderung des Beugungswinkels α zwischen der Drehachse S₂ des Rollenträgers 19 und der Drehachse S₁ der Kugelfläche 15 kann entsprechend der im Zusammenhang mit Fig. 1 bereits erläuterten Cosinus-Beziehung die Übersetzung der Getriebeeinheit stufenlos variiert werden. In Fig. 5a ist eine Ausrichtung der Verstelleinrichtung 53 für eine Übersetzung von i = 1 gezeigt.

Fig. 5b zeigt die Getriebeeinheit 11 gemäß Fig. 5a in einer Extremstellung der Verstelleinrichtung 53, durch die eine Übersetzung von i > 1 eingestellt ist. Die Drehachse S₂ des Rollenträgers 19 mit den Rollen 21 nimmt jetzt einen von Null verschiedenen Beugungswinkel α relativ zu der Drehachse S₁ der Kugelfläche 15 ein.

Eine Besonderheit der in Fig. 5a und 5b gezeigten Getriebeeinheit 11 besteht darin, dass die Achse der Antriebswelle 17 (zweite Welle) und die Drehachse S₂ des Rollenträgers 19 nicht zusammenfallen. Überdies ist eine Stillstandsverstellung der Verstelleinrichtung 53 möglich, da die Mittenebene der Hohlkugel 15 stets die Tangentialebene an die Mantelfläche des Kegelrads 81 bildet.

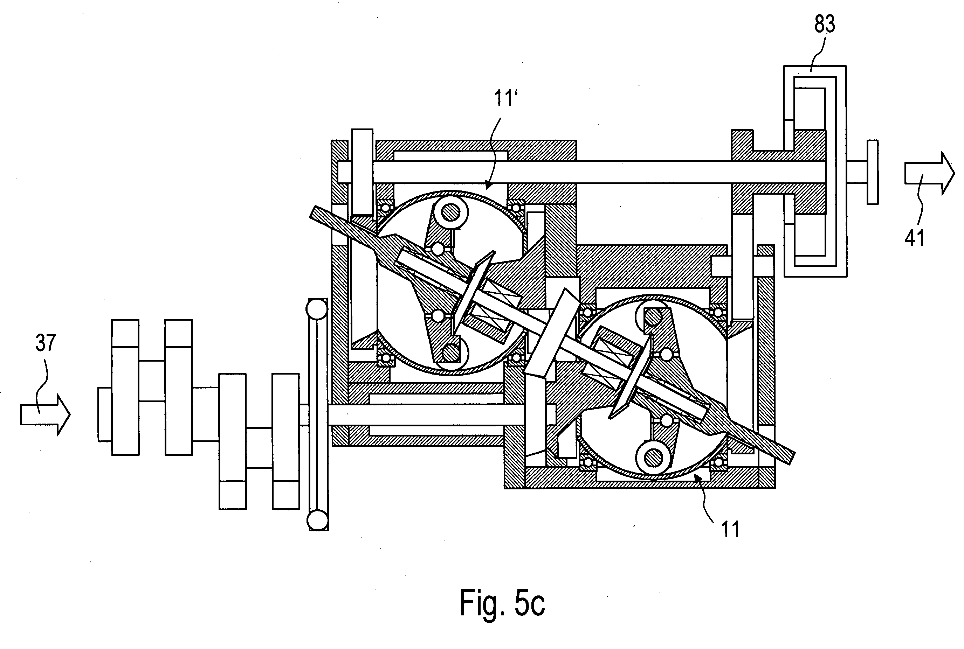

Fig. 5c zeigt eine mögliche Kombination zweier Getriebeeinheiten 11, 11' der im Zusammenhang mit Fig. 5a und 5b erläuterten Art zu einem IVT-Getriebe (Infinitely Variable Transmission) für einen Standardantrieb. Aufgrund einer Parallelschaltung der Getriebeeinheiten 11, 11' erfolgt die Drehmomentübertragung über zwei Lastzweige. Das abtriebsseitige Summiergetriebe 83 kann für einen Front-Quer-Antrieb auch an der Motorseite des Getriebes angeordnet werden.

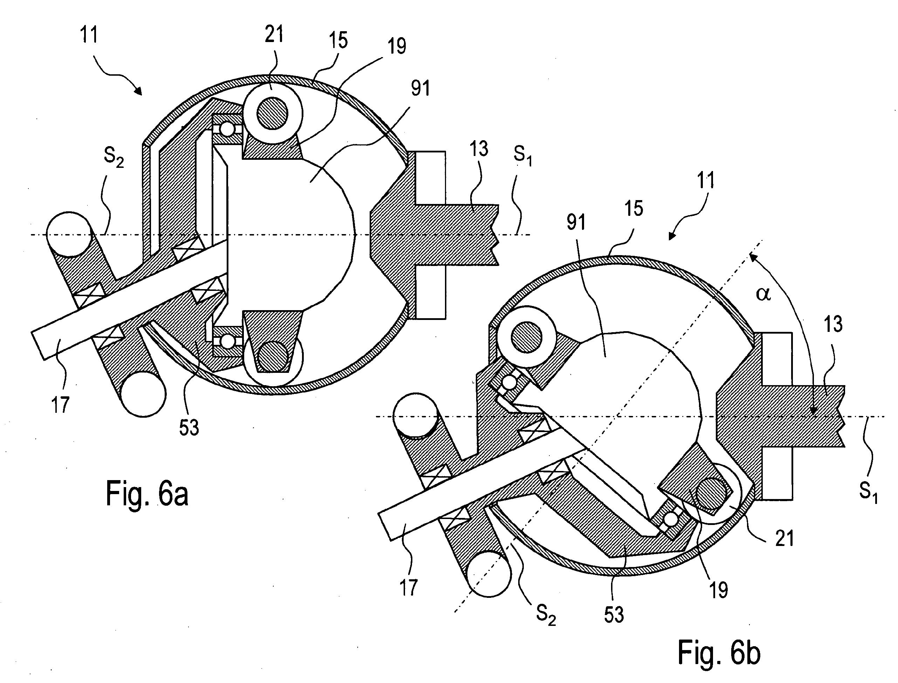

Fig. 6a und 6b zeigen eine Ausführungsform einer Getriebeeinheit 11, bei der die Kugelfläche 15 wiederum als Hohlkugel ausgebildet ist, wobei die an einem im Wesentlichen ringförmigen Rollenträgers 19 gelagerten Rollen 21 an der Innenseite der Hohlkugel reibschlüssig anliegen.

Die erste Welle 13 und die zweite Welle 17 sind gehäusefest gelagert. Dennoch ist eine stufenlose Änderung der Übersetzung möglich. Hierfür ist der Rollenträger 19 mit einer Gelenkkappe 91 fest verbunden, die gemeinsam mit der zweiten Welle 17 ein nicht näher dargestelltes homokinetisches Gelenk bildet. Mit anderen Worten ist der Rollenträger 19 hierdurch mit der zweiten Welle 17 drehfest verbunden, wobei die Drehachse S₂ des Rollenträgers 19 bezüglich der Achse der zweiten Welle 17 verschwenkbar ist.

Die Gelenkkappe 91 mit dem Rollenträger 19 ist an einer Verstelleinrichtung 53 drehbar gelagert, die wiederum um die Achse der zweiten Welle 17 drehbar gelagert ist. Die Drehachse S₂ des Rollenträgers 19 und die Drehachse der Verstelleinrichtung 53 verlaufen schräg zueinander. Durch Drehen der der Verstelleinrichtung 53 wird der Beugungswinkel α zwischen der Drehachse S₂ des Rollenträgers 19 und der Drehachse S₁ der Kugelfläche 15 geändert, so dass gemäß der bereits erläuterten Cosinus-Beziehung die Übersetzung der Getriebeeinheit stufenlos variiert wird. In Fig. 5a ist eine Ausrichtung der Verstelleinrichtung 53 für eine Übersetzung von i = 1 gezeigt.

Fig. 5b zeigt eine Übersetzung von i > 1, wobei die zweite Welle 17 die Antriebswelle ist.

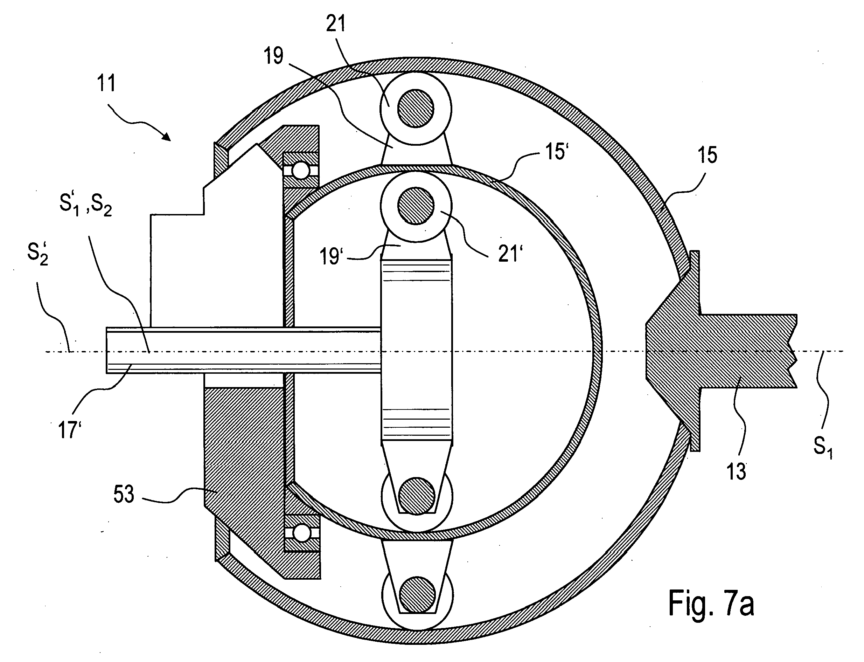

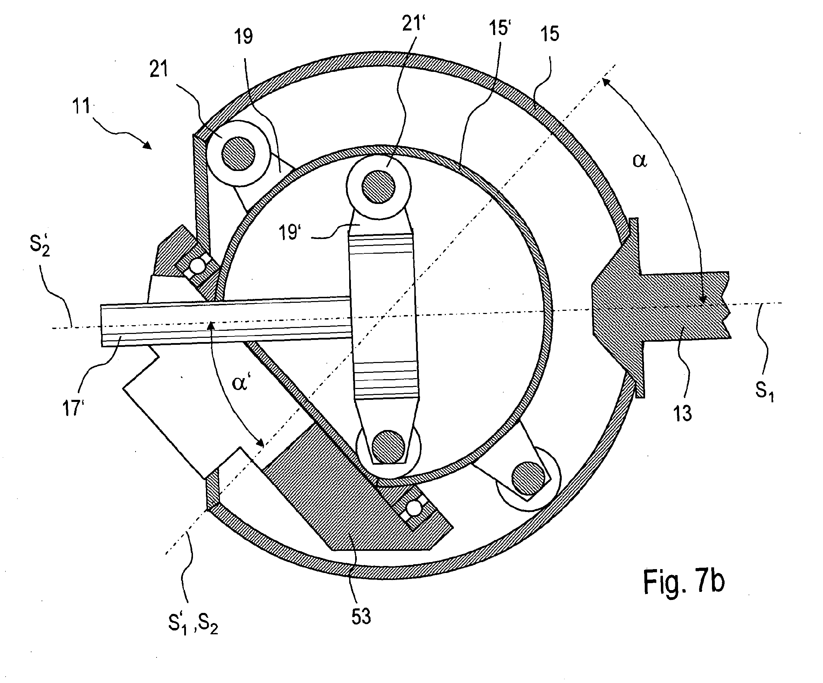

Fig. 7a und 7b zeigen eine Ausführungsform einer Getriebeeinheit 11, bei der die Verbindung zwischen der Rollenanordnung und der zweiten Welle (oder die Verbindung zwischen der ersten Welle und der Kugelfläche) durch ein stufenloses Getriebe der erläuterten Art gebildet ist. Mit anderen Worten sind zwei stufenlose Getriebe der bereits erläuterten Art zu einer gemeinsamen Einheit kombiniert, so dass bei kompakter Bauform höhere Übersetzungen erzielt werden können.

Hierfür ist eine erste Getriebestufe realisiert, indem an der Innenseite einer Kugelfläche 15, die als Hohlkugel ausgebildet und mit einer ersten Welle 13 starr verbunden ist, mehrere Rollen 21 reibschlüssig anliegen. Die Rollen 21 sind an einem Rollenträger 19 gelagert, der wiederum mit der Außenseite einer weiteren hohlen Kugelfläche 15' starr verbunden ist. Eine zweite Getriebestufe ist dadurch verwirklich, dass an der Innenseite der weiteren Kugelfläche 15' mehrere Rollen 21' eines weiteren Rollenträgers 19' reibschlüssig anliegen. Der weitere Rollenträger 19' ist mit einer zweiten Welle 17' starr gekoppelt. Die erste Welle 13 und die zweite Welle 17' sind gehäusefest gelagert.

Die weitere Kugelfläche 15' ist an einer Verstelleinrichtung 53 drehbar gelagert, wobei die Drehachse S₁' der weiteren Kugelfläche 15' stets mit der Drehachse S₂ des Rollenträgers 19 zusammenfällt. Mittels der Verstelleinrichtung 53 kann die gemeinsame Drehachse S₂ des Rollenträgers 19 und Drehachse S_{1'} der weiteren Kugelfläche 15' zugleich bezüglich der Drehachse S₁ der Kugelfläche 15 und bezüglich der Drehachse S_{2'} der weiteren Rollenanordnung 19' jeweils um einen Beugungswinkel α, α' verschwenkt werden. Dies ist in Fig. 7b für eine Extremstellung der weiteren Kugelfläche 15' gezeigt. Hieraus ergibt sich für jede der beiden genannten Getriebestufen eine stufenlos variable Übersetzung nach der bereits erläuterten Cosinus-Beziehung, so dass letztlich eine quadratische Abhängigkeit der Übersetzung vom Cosinus des Beugungswinkels α besteht, also i = cos(α) ^2.

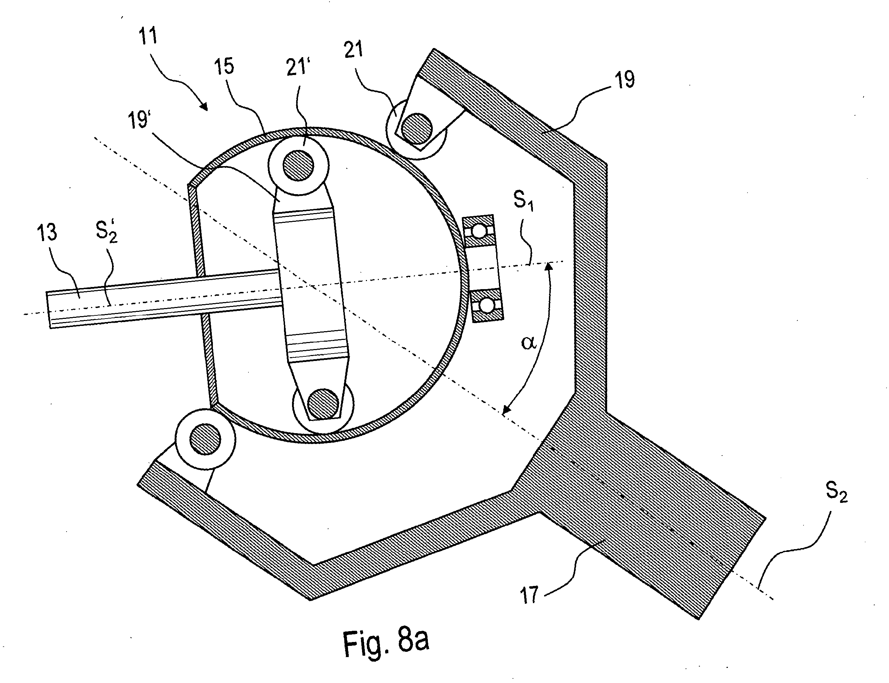

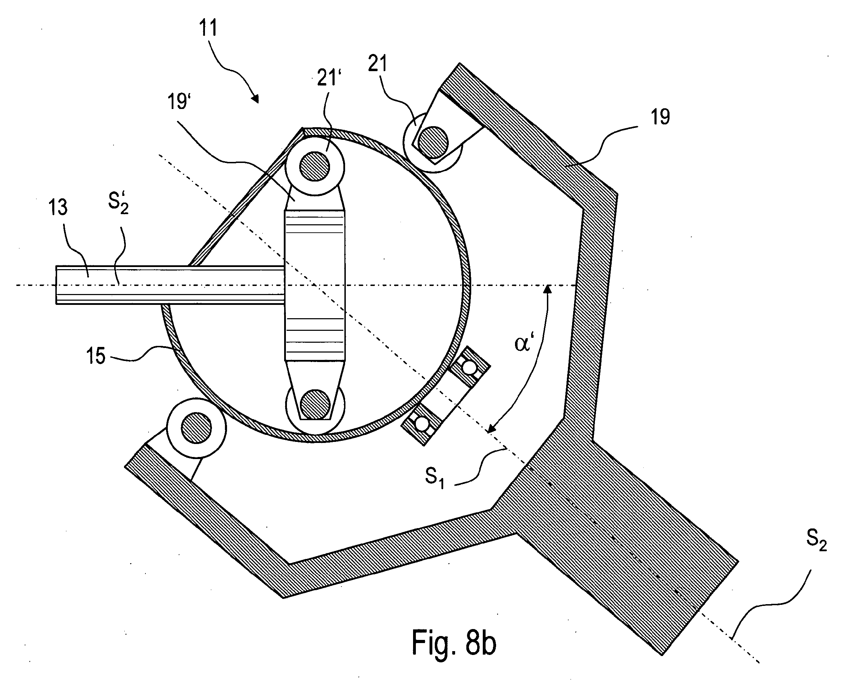

Fig. 8a und 8b zeigen eine weitere Ausführungsform einer Getriebeeinheit 11 mit mehreren kombinierten Getriebestufen. Diese Ausführungsform ähnelt der einstufigen Getriebeeinheit gemäß Fig. 1. Eine erste Welle 13 ist also mit einer Kugelfläche 15 drehfest gekoppelt, wobei an der Außenseite der Kugelfläche 15 mehrere Rollen 21 reibschlüssig anliegen. Die Rollen 21 sind an einem Rollenträger 19 gelagert, der mit einer zweiten Welle 17 starr verbunden ist. Die erste Welle 13 und die zweite Welle 17 sind gehäusefest gelagert.

Die genannte drehfeste Kopplung der ersten Welle 13 mit der Kugelfläche 15 ist durch eine zusätzliche Getriebestufe realisiert. Hierfür ist die Kugelfläche 15 als eine Hohlkugel ausgebildet, die um eine verschwenkbare Drehachse S₁ drehbar gelagert ist. Die erste Welle 13 ist mit einem weiteren Rollenträger 19' mit hieran gelagerten Rollen 21' starr verbunden. Die Rollen 21' des weiteren Rollenträgers 19' liegen an der Innenseite der Kugelfläche 15 reibschlüssig an.

Aufgrund dieser Anordnung lässt sich die Übersetzung stufenlos zwischen einer Übersetzung ins Schnelle und einer Übersetzung ins Langsame variieren, wobei im Folgenden beispielsweise vorausgesetzt wird, dass es sich bei der ersten Welle 13 um die Antriebswelle handelt. In der in Fig. 8a gezeigten Ausrichtung der Kugelfläche 15 fällt die Drehachse S₁ der Kugelfläche 15 mit der Drehachse S_{2'} des weiteren Rollenträgers 19' zusammen, entsprechend einer Teilübersetzung von i' = 1. Bezüglich der Drehachse S₂ des Rollenträgers 19 der zweiten Welle 17 nimmt die Drehachse S₁ der Kugelfläche 15 jedoch einen Beugungswinkel α ein. Für diese Getriebestufe ergibt sich hierdurch eine negative Teilübersetzung (i < 1), die auch der Gesamtübersetzung entspricht.

In der in Fig. 8b gezeigten Ausrichtung der Kugelfläche 15 hingegen steht die Drehachse S₁ der Kugelfläche 15 in einem Beugungswinkel α' zu der Drehachse S_{2'} des weiteren Rollenträgers 19'. Dies entspricht einer positiven Teilübersetzung dieser Getriebestufe (i > 1). Da die Drehachse S₁ der Kugelfläche 15 mit der Drehachse S₂ des Rollenträgers 19 der zweiten Welle 17 zusammenfällt (Teilübersetzung i = 1), entspricht diese positive Teilübersetzung auch der Gesamtübersetzung.

Zu sämtlichen der erläuterten Ausführungsformen ist noch anzumerken, dass auch mehr als zwei Getriebeeinheiten 11, 11' miteinander gekoppelt werden können, insbesondere in einer Parallelschaltung (vgl. Fig. 5c) oder einer seriellen Anordnung (vgl. Fig. 3d). Die Verbindung zwischen den Getriebeeinheiten 11, 11' muss auch nicht unbedingt formschlüssig erfolgen (wie beispielsweise über die Stirnräder 39, 39' gemäß Fig. 2d, 3a oder die tonnenförmigen Stirnräder 71, 71' gemäß Fig. 4a bis 4c), sondern es ist beispielsweise auch eine reibschlüssige Kopplung möglich (beispielsweise über eine Kupplung).

### Bezugszeichenliste

- 11, 11', 11", 11''': Getriebeeinheit
- 13, 13': erste Welle
- 15, 15': Kugelfläche
- 17, 17': zweite Welle
- 19, 19': Rollenträger
- 21, 21': Rolle
- 23: Großkreis der Kugelfläche
- 31,31': Gehäuse
- 33, 33': Schwenkbügel
- 35, 35': Schwenkachse
- 37: Antrieb
- 39, 39': Zahnrad
- 41: Abtrieb
- 43: Kette
- 44: Wendegetriebe
- 45: Schwenkeinrichtung
- 47: Tellerrad
- 49, 49': Innenkugel
- 53, 53': Verstelleinrichtung
- 55, 55': Wälzlager
- 57, 57': Schneckenrad
- 59: Zahnstange
- 71, 71': tonnenförmiges Stirnrad
- 81: Kegelrad
- 83: Summiergetriebe
- 91: Gelenkkappe

- α, α': Beugungswinkel zwischen S₁, S_{1'} und S₂, S_{2'}
- β, β': Beugungswinkel zwischen S₁, S_{1'} und 13, 13'
- γ': Neigungswinkel zwischen 13' und S_{2'}
- r: Radius der Kugelfläche
- S i, S i': Drehachse der Kugelfläche
- S₂, S_{2'}: Drehachse der Rollenanordnung
- v₁, v₂: Geschwindigkeit
- ω₁, ω₂: Winkelgeschwindigkeit

## Patentansprüche

1. Stufenloses Getriebe mit wenigstens einer Getriebeeinheit (11, 11'),
wobei die Getriebeeinheit eine erste Welle (13, 13') aufweist, die mit einer Kugelfläche (15, 15') drehfest verbunden ist, und
wobei die Getriebeeinheit eine zweite Welle (17, 17') aufweist, die mit einer drehbaren Anordnung (19, 19') von mehreren Rollen (21, 21') drehfest verbunden ist,
wobei die Rollen reibschlüssig an der Kugelfläche anliegen, und
wobei die Rollenachsen derart ausgerichtet sind,
- dass aufgrund des Reibschlusses zwischen den Rollen (21, 21') und der Kugelfläche (15, 15') ein Drehmoment zwischen der Kugelfläche und der Rollenanordnung übertragbar ist und
- dass die Drehachse (S₁, S_{1'}) der Kugelfläche und die Drehachse (S₂, S_{2'}) der Rollenanordnung durch Abrollen der Rollen an der Kugelfläche relativ zueinander verschwenkbar sind.

2. Getriebe nach Anspruch 1,
**dadurch gekennzeichnet,**
**dass** durch Verändern des Winkels (α, α') zwischen der Drehachse (S₁, S_{1'}) der Kugelfläche (15, 15') und der Drehachse (S₂, S_{2'}) der Rollenanordnung die Übersetzung der Getriebeeinheit veränderbar ist.

3. Getriebe nach einem der vorhergehenden Ansprüche,
**dadurch gekennzeichnet,**
**dass** die Drehachse (S₁, S_{1'}) der Kugelfläche und die Drehachse (S₂, S_{2'}) der Rollenanordnung um eine Achse (35, 35') relativ zueinander verschwenkbar sind, die durch den Mittelpunkt der Kugelfläche (15, 15') verläuft.

4. Getriebe nach einem der vorhergehenden Ansprüche,
**dadurch gekennzeichnet,**
**dass** die Rollenachsen in zumindest einer Normalebene der Drehachse (S₂, S_{2'}) der Rollenanordnung liegen.

5. Getriebe nach einem der vorhergehenden Ansprüche,
**dadurch gekennzeichnet,**
**dass** die Rollen (21, 21') eine jeweilige Mittenebene besitzen, die die Drehachse (S₂, S_{2'}) der Rollenanordnung enthält.

6. Getriebe nach einem der vorhergehenden Ansprüche,
**dadurch gekennzeichnet,**
**dass** die Rollen (21, 21') die Kugelfläche (15, 15') umfänglich umgeben.

7. Getriebe nach einem der vorhergehenden Ansprüche,
**dadurch gekennzeichnet,**
**dass** die Rollen (21, 21') entlang eines Großkreises der Kugelfläche (15, 15') angeordnet sind.

8. Getriebe nach einem der vorhergehenden Ansprüche,
**dadurch gekennzeichnet,**
**dass** die Rollen (21, 21') zylinderförmig, tonnenförmig oder ballig sind.

9. Getriebe nach einem der vorhergehenden Ansprüche,
**dadurch gekennzeichnet,**
**dass** die Kugelfläche (15, 15') zumindest im Bereich der Rollen (21, 21') glatt ist.

10. Getriebe nach einem der vorhergehenden Ansprüche,
**dadurch gekennzeichnet,**
**dass** die Kugelfläche (15, 15') die Oberfläche einer Vollkugel oder Hohlkugel ist, die einstückig mit der ersten Welle ausgebildet oder die an der ersten Welle befestigt ist.

11. Getriebe nach einem der Ansprüche 1 bis 9,
**dadurch gekennzeichnet,**
**dass** die Kugelfläche (15, 15') die Außenseite einer Hohlkugel ist, die gemeinsam mit der ersten Welle (13, 13') ein homokinetisches Gelenk bildet.

12. Getriebe nach Anspruch 11,
**dadurch gekennzeichnet,**
**dass** der Kugelfläche (15, 15') eine Verstelleinrichtung (53, 53') zugeordnet ist, durch die die Lage der Drehachse (S₁, S_{1'}) der Kugelfläche (15, 15') relativ zu der Achse der ersten Welle (13, 13') und/oder der Winkel (α) zwischen der Drehachse (S₁) der Kugelfläche (15) und der Drehachse (S₂) der Rollenanordnung verstellbar ist.

13. Getriebe nach Anspruch 12,
**dadurch gekennzeichnet,**
**dass** die Kugelfläche (15, 15') an der Verstelleinrichtung (53, 53') um eine Achse (S₁, S_{1'}) drehbar gelagert ist, die schräg zu der Achse der ersten Welle (13, 13') verläuft, und/oder
**dass** die Verstelleinrichtung (53, 53') um die Achse der ersten Welle (13, 13') drehbar gelagert ist.

14. Getriebe nach einem der Ansprüche 1 bis 9,
**dadurch gekennzeichnet,**
**dass** die Kugelfläche (15, 15') die Innenseite einer Hohlkugel ist.

15. Getriebe nach Anspruch 14,
**dadurch gekennzeichnet,**
**dass** den Rollen (21) eine Verstelleinrichtung (53) zugeordnet ist, durch die die Lage der Drehachse (S₂) der Rollenanordnung relativ zu der Achse der zweiten Welle (17) und/oder der Winkel (α) zwischen der Drehachse (S₁) der Kugelfläche (15) und der Drehachse (S₂) der Rollenanordnung verstellbar ist.

16. Getriebe nach Anspruch 15,
**dadurch gekennzeichnet,**
**dass** die Rollenanordnung an der Verstelleinrichtung (53) um eine Achse (S₂) drehbar gelagert ist, die schräg zu der Achse der zweiten Welle (17) verläuft, und/oder
**dass** die Verstelleinrichtung (53) um die Achse zweiten Welle (17) drehbar gelagert ist.

17. Getriebe nach einem der Ansprüche 14 bis 16,
**dadurch gekennzeichnet,**
**dass** die Rollenanordnung gemeinsam mit der zweiten Welle (17) ein homokinetisches Gelenk bildet.

18. Getriebe nach einem der vorhergehenden Ansprüche,
**dadurch gekennzeichnet,**
**dass** die erste Welle (13) mit der Kugelfläche (15') über eine Getriebestufe (15, 19) verbunden ist, und/oder
**dass** die zweite Welle (17') mit der Anordnung (19) von mehreren Rollen (21) über eine Getriebestufe (19', 15') verbunden ist.

19. Getriebe nach Anspruch 18,
**dadurch gekennzeichnet,**
**dass** die Kugelfläche (15') mit einer weiteren Anordnung (19) von mehreren Rollen (21) drehfest verbunden ist, wobei die Rollen (21) dieser weiteren Anordnung (19) reibschlüssig an einer weiteren Kugelfläche (15) anliegen, die mit der ersten Welle (13) drehfest verbunden ist.

20. Getriebe nach einem der vorhergehenden Ansprüche,
**dadurch gekennzeichnet,**
**dass** das Getriebe wenigstens eine erste und eine zweite Getriebeeinheit (11, 11') aufweist,
wobei zumindest jeweils eine Welle (13, 13'; 17, 17') der ersten Getriebeeinheit und der zweiten Getriebeeinheit gehäusefest gelagert sind, und
wobei die jeweilige andere Welle (17 bzw. 13) der ersten Getriebeeinheit mit der jeweiligen anderen Welle (17' bzw. 13') der zweiten Getriebeeinheit kraftschlüssig verbunden ist.

21. Getriebe nach Anspruch 20,
**dadurch gekennzeichnet,**
**dass** die erste Welle (13) der ersten Getriebeeinheit (11) mit der ersten Welle (13') der zweiten Getriebeeinheit (11') kraftschlüssig verbunden ist oder die zweite Welle (17) der ersten Getriebeeinheit (11) mit der zweiten Welle (17') der zweiten Getriebeeinheit (11') kraftschlüssig verbunden ist.

22. Getriebe nach Anspruch 20,
**dadurch gekennzeichnet,**
**dass** die zweite Welle (17) der ersten Getriebeeinheit (11) mit der ersten Welle (13') der zweiten Getriebeeinheit (11') kraftschlüssig verbunden ist.

23. Getriebe nach einem der Ansprüche 20 bis 22,
**dadurch gekennzeichnet,**
**dass** die kraftschlüssig miteinander verbundenen Wellen über Zahnräder (39, 39'; 71, 71'), eine Kette (43) oder einen Zahnriemen verbunden sind.

24. Getriebe nach einem der Ansprüche 20 bis 23,
**dadurch gekennzeichnet,**
**dass** die kraftschlüssig miteinander verbundenen Wellen (17, 13') der Getriebeeinheiten gemeinsam relativ zu den gehäusefest gelagerten Wellen (13, 17') verschwenkbar sind.

25. Getriebe nach Anspruch 24,
**dadurch gekennzeichnet,**
**dass** die kraftschlüssig miteinander verbundenen Wellen (17, 13') an einer gemeinsamen Schwenkeinrichtung (33, 45) gelagert sind,
wobei die Schwenkeinrichtung um eine Achse (35) verschwenkbar ist, die durch den Mittelpunkt der Kugelfläche (15) der ersten Getriebeeinheit (11) und den Mittelpunkt der Kugelfläche (15') der zweiten Getriebeeinheit (11') verläuft, und/oder wobei die Schwenkeinrichtung um eine Achse (35) verschwenkbar ist, die senkrecht oder schräg zu der jeweiligen ersten Welle (13, 13') und der jeweiligen zweiten Welle (17, 17') der Getriebeeinheiten verläuft.

26. Getriebe nach einem der Ansprüche 24 oder 25,
**dadurch gekennzeichnet,**
**dass** die Achsen (S₂, S_{1'}) der gemeinsam verschwenkbaren Wellen (17, 13') parallel zueinander verlaufen.

27. Getriebe nach einem der vorhergehenden Ansprüche,
**dadurch gekennzeichnet,**
**dass** das Getriebe wenigstens eine erste und eine zweite Getriebeeinheit (11, 11') aufweist,
wobei die Wellen der Getriebeeinheiten an einem gemeinsamen Gehäuse (31) gehäusefest gelagert sind,
wobei eine Welle (13) der ersten Getriebeeinheit mit einer Welle (13') der zweiten Getriebeeinheit kraftschlüssig verbunden ist,
wobei bei jeder Getriebeeinheit die jeweilige erste Welle (13, 13') mit der jeweiligen Kugelfläche (15, 15') ein homokinetisches Gelenk bildet, so dass die Drehachse (S₁, S_{1'}) der jeweiligen Kugelfläche bezüglich der jeweiligen ersten Welle (13, 13') um einen Beugungswinkel (β, β') geneigt ist,
wobei den Kugelflächen eine jeweilige Verstelleinrichtung (53, 53') zum Einstellen des jeweiligen Winkels (α, α') zwischen der Drehachse (S₁, S_{1'}) der jeweiligen Kugelfläche (15, 15') und der Achse (S₂, S_{2'}) der jeweiligen zweiten Welle (17, 17') zugeordnet ist, und
wobei die Verstelleinrichtungen (53, 53') der Getriebeeinheiten miteinander gekoppelt sind.

28. Getriebe nach Anspruch 27,
**dadurch gekennzeichnet,**
**dass** die Verstelleinrichtungen (53, 53') derart miteinander gekoppelt sind, dass dann, wenn für die erste Getriebeeinheit (11) eine hohe Übersetzung eingestellt ist, für die zweite Getriebeeinheit (11') eine geringe Übersetzung eingestellt ist, und umgekehrt.

29. Getriebe nach einem der Ansprüche 27 oder 28,
**dadurch gekennzeichnet,**
**dass** die Verstelleinrichtungen (53, 53') um die Achse der jeweiligen ersten Welle (13, 13') drehbar gelagert sind.

30. Getriebe nach einem der Ansprüche 27 bis 29,
**dadurch gekennzeichnet,**
**dass** die Verstelleinrichtungen (53, 53') mittels einer Steuereinrichtung (59) verstellbar sind, die aus dem Gehäuse (31) herausragt.

31. Getriebe nach einem der Ansprüche 27 bis 30,
**dadurch gekennzeichnet,**
**dass** die nicht kraftschlüssig miteinander verbundenen Wellen (17, 17') der Getriebeeinheiten in zueinander entgegengesetzter Richtung koaxial aus dem Gehäuse herausgeführt sind,
**dass** das Gehäuse (31) koaxial zu der gemeinsamen Achse (S₂, S_{2'}) dieser Wellen (17, 17') drehbar gelagert ist, und
**dass** die Achsen der kraftschlüssig miteinander verbundenen Wellen (13, 13') der Getriebeeinheiten schräg zu der Drehachse des Gehäuses liegen.

32. Getriebe nach einem der Ansprüche 20 bis 23,
**dadurch gekennzeichnet,**
**dass** die kraftschlüssig miteinander verbundenen Wellen (13, 13') der Getriebeeinheiten (11, 11') um unterschiedliche Schwenkachsen (35, 35') relativ zu den gehäusefest gelagerten Wellen (17, 17') verschwenkbar sind.

33. Getriebe nach Anspruch 32,
**dadurch gekennzeichnet,**
**dass** die jeweilige Schwenkachse (35, 35') der kraftschlüssig miteinander verbundenen Wellen (13, 13') durch den Mittelpunkt der Kugelfläche (15, 15') der jeweiligen Getriebeeinheit (11, 11') verläuft,
wobei die Schwenkachsen parallel zueinander verlaufen.

34. Getriebe nach einem der Ansprüche 32 oder 33,
**dadurch gekennzeichnet,**
**dass** die kraftschlüssig miteinander verbundenen Wellen (13, 13') der Getriebeeinheiten mittels einer jeweiligen Schwenkeinrichtung (33, 33') schwenkbar gelagert sind.

35. Getriebe nach einem der Ansprüche 32 bis 34,
**dadurch gekennzeichnet,**
**dass** die kraftschlüssig miteinander verbundenen Wellen (13, 13') der Getriebeeinheiten über tonnenförmige Stirnräder (71, 71') verbunden sind.

36. Getriebe nach einem der Ansprüche 32 bis 35,
**dadurch gekennzeichnet,**
**dass** die gehäusefest gelagerten Wellen (17, 17') der Getriebeeinheiten in zueinander entgegengesetzter Richtung koaxial aus einem Gehäuse herausgeführt sind.
